# EUROPÄISCHE PATENTSCHRIFT

(11) **EP 1 405 896 B1**
(45) Veröffentlichungstag und Bekanntmachung des Hinweises auf die Patenterteilung: **08.06.2016**
(21) Anmeldenummer: 03020568.6
(22) Anmeldetag: 18.09.2003
(51) Int. Cl.: C10L 1/14, B01F 15/00, B01F 17/00

(54) **Verfahren zur Herstellung von Additivmischungen für Mineralöle und Mineralöldestillate**
Process for the production of additive compositions for mineral oils and mineral oil distillates
Procédé de fabrication de compositions d'additifs pour des huiles minérales et des distillats d'huile minérale

(30) Priorität: 01.10.2002 DE 10245737
(43) Veröffentlichungstag der Anmeldung: 07.04.2004
(60) Teilanmeldung: 15197162.9
(73) Patentinhaber: Clariant Produkte (Deutschland) GmbH, 65929 Frankfurt am Main (DE)
(72) Erfinder: Krull, Mathias, Dr., 55296 Harxheim (DE); Bettermann, Gerhard, Dr., 46562 Voerde (DE); Adams, Curd-Werner, Dr, 46147 Oberhausen (DE); Reimann, Werner, Dr., 65929 Frankfurt am main (DE)

(56) Entgegenhaltungen:
- EP-A- 0 549 864
- EP-A- 1 151 787
- GB-A- 1 455 663
- US-A- 4 211 534
- US-A- 5 391 632
- US-A- 6 090 169
- US-B1- 6 391 071

## Beschreibung

Die vorliegende Erfindung betrifft ein kontinuierliches Verfahren zur Herstellung sedimentationsstabiler Additivmischungen für Mineralöle und Mineralöldestillate unter Verwendung eines statischen Mischers.

Rohöle und durch Destillation von Rohölen gewonnene Mitteldestillate wie Gasöl, Dieselöl und Heizöl enthalten je nach Herkunft der Rohöle unterschiedliche Mengen an n-Paraffinen, die bei Erniedrigung der Temperatur als plättchenförmige Kristalle auskristallisieren und teilweise unter Einschluss von Öl agglomerieren. Durch diese Agglomeration kommt es zu einer Verschlechterung der Fließeigenschaften der Öle bzw. Destillate, wodurch bei Gewinnung, Transport, Lagerung und/oder Einsatz der Mineralöle und Mineralöldestillate Störungen auftreten können. Beim Transport von Mineralölen durch Rohrleitungen kann das Kristallisationsphänomen vor allem im Winter zu Ablagerungen an den Rohrwänden und in Einzelfällen, z.B. Stillstand einer Pipeline, sogar zu deren völliger Verstopfung führen. Bei Lagerung und Weiterverarbeitung der Mineralöle kann es ferner im Winter erforderlich sein, die Mineralöle in beheizten Tanks zu lagern. Bei Mineralöldestillaten kommt es als Folge der Kristallisation gegebenenfalls zu Verstopfungen der Filter in Dieselmotoren und Feuerungsanlagen, wodurch eine sichere Dosierung der Brennstoffe verhindert wird und unter Umständen eine völlige Unterbrechung der Kraftstoff- bzw. Heizmittelzufuhr eintritt. Neben den klassischen Methoden zur Beseitigung der auskristallisierten Paraffine (thermisch, mechanisch oder mit Lösungsmitteln), die sich lediglich auf die Entfernung der bereits gebildeten Ausfällungen beziehen, wurden in den letzten Jahren chemische Additive (sogenannte Fließverbesserer) entwickelt. Diese bewirken durch physikalisches Zusammenwirken mit den ausfallenden Paraffinkristallen, dass deren Form, Größe und Adhäsionseigenschaften modifiziert werden. Die Additive wirken dabei als zusätzliche Kristallkeime und kristallisieren teilweise mit den Paraffinen aus, wodurch eine größere Anzahl kleinerer Paraffinkristalle mit veränderter Kristallform entsteht. Die modifizierten Paraffinkristalle neigen weniger zur Agglomeration, so dass sich die mit diesen Additiven versetzten Öle noch bei Temperaturen pumpen bzw. verarbeiten lassen, die oft mehr als 20°C tiefer liegen als bei nichtadditivierten Ölen.

Fließverbesserer dieser Art sind beispielsweise Copolymere aus Ethylen und Vinylestern, Acrylestern oder weiteren olefinisch ungesättigten Verbindungen. Andere zu diesem Zweck verwendete Komponenten sind z.B. Paraffindispergatoren, Kammpolymere, Alkylphenolharze, Olefincopolymere und Fettalkylester von Polyolen.

Für die Herstellung von Mitteldestillaten wird eine Vielzahl verschiedener Rohöle eingesetzt. Die Verarbeitung in den einzelnen Raffinerien erfolgt heutzutage in mehr oder weniger individuellen Anlagenkonfigurationen. Zudem produziert jede Raffinerie Destillatqualitäten unterschiedlicher Spezifikationen wie z.B. Heizöl, Sommer- und Winterdiesel. Zur Einstellung der Kälteeigenschaften dieser verschiedenen Öle wurden in den letzten Jahren auf das Ansprechverhalten der einzelnen Ole optimierte Additive entwickelt, um mit möglichst niedrigen Dosierraten und damit reduzierten Kosten spezifikationsgerechte Einstellungen sicherzustellen. Darüber hinaus sind dabei auch durch geeignete Wahl der Wirkstoffkonzentration die Verarbeitungsmöglichkeiten der Raffinerie hinsichtlich Viskosität und Pumpbarkeit der Additive zu berücksichtigen.

Bei diesen speziellen Additiven handelt es sich häufig um Mischungen verschiedener Wirkstoffe, die ausgehend von wenigen Basiswirkstoffen speziell auf das zu behandelnde Öl abgestimmt sind. Daher beinhalten heutige Additive im allgemeinen mehr als nur eine Komponente. Diese Mischungen können sowohl verschiedene Wirkstoffe einer Klasse als auch verschiedener Gruppen enthalten.

Insbesondere bei Additiven auf Basis von Ethylencopolymeren handelt es sich um teilkristalline Polymere, die bei Raumtemperatur fest oder hochviskos sind. Vor der Verarbeitung zu Additivformulierungen bzw. der Dosierung in Mitteldestillate müssen sie zur Absenkung der Viskosität folglich erwärmt und/oder verdünnt werden, um gepumpt werden zu können. Dies erfordert entweder eine ständige Warmlagerung oder eine entsprechende Vorlaufzeit zum Heizen. Bei letzteren besteht insbesondere bei schnellem Heizen die Gefahr der Überhitzung im Bereich der Heizelemente im Lagertank.

EP-A2-549864 lehrt ein Verfahren und eine Vorrichtung zum Einmischen viskoser Polymere, die Eignung als drag reducer besitzen, in ein Lösemittel, wobei ein statischer Mischer als Mischelement verwendet wird.

EP-A2-931825 lehrt ein Verfahren zur Verbesserung der Kaltfließeigenschaften von Ölen mit einem Schwefelgehalt von weniger als 500 ppm und einem Gehalt an n-Paraffinen der Kettenlänge C18 und länger von mindestens 8 Gew.-%, gekennzeichnet durch die Zugabe eines Additivs, enthaltend eine Mischung aus
A) 15 bis 50 Gew.-% eines Copolymers, enthaltend neben 87 bis 92 mol-% von Struktureinheiten, die sich von Ethylen ableiten;
   a) 6,5 bis 12 mol-% Struktureinheiten, die sich von Vinylacetat ableiten,
   b) 0,5 bis 6 mol-% Struktureinheiten, die sich von 4-Methylpenten-1 ableiten, mit der Maßgabe, daß die Summe der molaren Anteile der Struktureinheiten a) und b) 8 bis 14 mol-% beträgt,und
B) 85 bis 50 Gew.-% mindestens eines weiteren Copolymers oder Terpolymers aus Ethylen und Vinylestern oder Acrylsäureestern, das für sich allein ein Kaltfließverbesserer ist.

Nach dem Stand der Technik werden Additivmischungen chargenweise hergestellt, d.h. eine oder mehrere Wirkstoffkomponenten und das Lösungsmittel werden nacheinander in einen Behälter dosiert und dann durch Rühren oder Umpumpen gemischt. Dieses Verfahren ist nachteilig, da es lange Zeit zum Chargieren, Aufheizen und Mischen benötigt. Die Erzielung einer ausreichenden Homogenität erfordert insbesondere beim Mischen von Wirkstoffen und Lösungsmittel unterschiedlicher Viskosität ein längeres Rühren oder Umwälzen über mehrere Stunden bis Tage. Die gewünschte bzw. erforderliche Mischtemperatur stellt sich dabei entsprechend den Mengen der zu mischenden Komponenten und deren Temperaturen sowie der installierten Heizleistung im Allgemeinen nur langsam ein. Sie weicht dabei aber beispielsweise an der Dosierstelle der Komponenten sowie an den Heizelementen deutlich vom Mittelwert ab. Der Temperaturverlauf während des Mischvorgangs ist somit nur schwer reproduzierbar. Für einen kurzfristigen Versand muss zudem eine große Anzahl von Behältern mit fertig formulierten Additivmischungen auf Verdacht in erwärmtem Zustand vorgehalten werden.

Problematisch bei der chargenweisen Herstellung derartiger Formulierungen ist die Tatsache, dass insbesondere bei schnellem Erwärmen an den Heizelementen wie z.B. dem Gefäßmantel deutliche Überhitzungen auftreten können, die bei der anschließenden Lagerung der so hergestellten Additive zur Sedimentation der suspendierten Wirkstoffe, insbesondere der Ethylen-Copolymere, führen kann.

Des weiteren ist die Fließfähigkeit bzw. Pumpbarkeit von Dispersionen dieser teilkristallinen Polymere vielfach von den Mischbedingungen abhängig. So führen partiell bzw. unvollständig aufgeschmolzene Formulierungen teilkristalliner Polymere mit Lösungsmittel und gegebenenfalls weiteren Wirkstoffen zu Dispersionen mit hohem Eigenstockpunkt (Pour Point), wogegen vollständig aufgeschmolzene Polymere Dispersionen mit deutlich niedrigeren Pour Points ergeben. Die gezielte Einstellung eines für das Produkthandling wichtigen konstanten Pour Points der hergestellten Formulierung ist somit beim chargenweisen Mischen nur mit großem technischen und/oder zeitlichen Zusatzaufwand, beispielsweise durch Aufheizen oder Kühlen der fertigen Mischung, möglich.

Die der vorliegenden Erfindung zugrundeliegende Aufgabe bestand somit darin, ein Mischverfahren zu finden, das die genannten Nachteile vermeidet. Zum einen sollen die Homogenität und die Sedimentationsstabilität dieser Mischungen verbessert werden. Es soll zum anderen ermöglichen, mit geringem Aufwand und in kurzer Zeit aus wenigen Komponenten verschieden zusammengesetzte Additivmischungen herzustellen. Zugleich soll durch die gezielte und schnelle Einstellung der Mischungstemperatur der Pour Point der Mischung kontrollierbar sein.

Überraschenderweise wurde gefunden, dass die geforderten Eigenschaften durch ein kontinuierliches Mischverfahren verwirklicht werden, bei dem unter Verwendung eines statischen Mischers bei definierter und konstanter Temperatur gearbeitet wird.

Gegenstand der Erfindung ist ein kontinuierliches Verfahren zur Herstellung von Additivmischungen für Mineralöle und Mineralöldestillate, enthaltend
A) einen Kaltfließverbesserer für Mitteldestillate, welcher ein oder mehrere Copolymere aus Ethylen und Vinylester umfasst, und
C) mindestens ein organisches Lösungsmittel, ausgewählt aus aliphatischen und/oder aromatischen Kohlenwasserstoffen oder Kohlenwasserstoffgemischen,
worin der Anteil der einzelnen Kaltfließverbesserer an der Mischung in Gewichtsteilen ohne Lösungsmittel zwischen 2,5 und 80 Gew.-% und der Lösungsmittelanteil zwischen 10 und 95 Gew.-% liegt,
gekennzeichnet durch die Mischung von Kaltfließverbesserer und Lösungsmittel mittels eines statischen Mischers, wobei die Temperatur der Additivmischung am Auslaß des statischen Mischers von 30°C bis 90°C beträgt.
Kaltfließverbesserer im Sinne dieser Erfindung sind solche Stoffe, die in untergeordneten Mengen von beispielsweise 10 bis 10.000 ppm eine oder mehrere Kaltfließeigenschaften von tierischen, pflanzlichen oder mineralischen Ölen, wie beispielsweise Cloud Point, Cold Filter Plugging Point, Pour Point und/oder Paraffindispergierung, verbessern. Solche Kaltfließverbesserer sind beispielsweise und nicht abschließend
- Copolymere aus Ethylen und ungesättigten Estern, Ethern und/oder Olefinen,
- polare stickstoffhaltige Verbindungen,
- Alkylphenol-Aldehydharze,
- Kammpolymere,
- Olefincopolymere und
- Polyoxyalkylenderivate.

Die Temperatur der Mischung am Ende des statischen Mischers beträgt vorzugsweise 50 bis 85°C. Das erfindungsgemäße Verfahren erfordert grundsätzlich keine Temperaturkonstanz. Bevorzugt ist es, während der Mischung die Temperatur am Auslaß des statischen Mischers auf ± 10°C, insbesondere auf ± 5°C konstant zu halten.

Die Temperatur der einzusetzenden Kaltfließverbesserer wird bevorzugt so eingestellt, dass ihre Viskosität unterhalb 5.000 mPas, bevorzugt zwischen 1 und 1.000 mPas und besonders bevorzugt zwischen 10 und 500 mPas liegt. Dies sind je nach Kaltfließverbesserer bis zu 150°C, im allgemeinen 20 bis 120°C. Das Lösungsmittel kann eine höhere oder niedrigere Temperatur haben. Bevorzugt wird sie so gewählt, dass die resultierende Mischtemperatur der Zieltemperatur der Mischung entspricht. Teilkristalline Kaltfließverbesserer können oberhalb wie auch unterhalb ihres Trübungspunktes eingesetzt werden. Zur Einstellung eines niedrigen Pour Points werden sie bevorzugt oberhalb des Trübungspunktes eingesetzt. So werden insbesondere Ethylen-Copolymere bevorzugt bei Temperaturen von 20 bis 120°C, bevorzugt zwischen 60 und 100°C eingesetzt.

Unter statischen Mischern versteht man Vorrichtungen mit feststehenden Einbauten, die unter Nutzung der Strömungsenergie die Mischung fluider Produktströme bewirken. Durch Intensivierung der Turbulenzen im durchströmten Rohr vermindern sie die zur Einstellung einer ausreichenden Mischgüte erforderliche Strecke. In bevorzugten Ausführungsformen bestehen sie aus gleichartigen Mischelementen, die einzeln oder in Gruppen zusammengefasst, und gegeneinander um 90° versetzt hintereinander in einen Kanal eingebaut werden, durch den der Produktstrom fließt. Die Mischelemente sollen so beschaffen sein, dass sie den Produktstrom räumlich ablenken und scheren.

Die Auswahl des geeigneten Mischers hängt nicht zuletzt von der im Förderrohr herrschenden Strömung ab: So erfordert eine laminare Strömung intensiveres Trennen, Umlagern und Rückvermischen des Stoffstroms als eine turbulente Strömung. Der Stand der Technik kennt eine Vielzahl von Bauarten statischer Mischer, die für das erfindungsgemäße Verfahren geeignet sind. Im Hinblick auf die unterschiedlichen Bauarten statischer Mischer wird auf die Zusammenstellung in M.H. Pahl und E. Muschelknautz, Chem.-Ing.-Tech. Band 51 (1979), Seiten 347 bis 364, Bezug genommen, und diese Offenbarung hiermit in vorliegende Anmeldung einbezogen.

Als statische Mischer bewährt haben sich z.B. Multiflux-, Sulzer-, PMR-, McHugh-, Komax- und Honeycomb-, X-, Ross-ISG-, und Wendelmischer. Besonders bevorzugt sind Wendelmischer mit Wendelelementgruppen aus 2 bis 200, bevorzugt 5 bis 100 und speziell 10 bis 50 Mischelementen, die eine vollständige Radialmischung bewirken, z. B. Kenics-Mischer.

Der statische Mischer wird bevorzugt in eine für die Förderung der vereinigten Additivkomponenten verwendete Rohrleitung zwischen den Lagerbehältern der Fließverbesserer/Lösungsmittel und dem Versandgefäß eingesetzt. Additivkomponenten, die in untergeordneten Anteilen, z.B. bis zu 10 Vol.-%, bevorzugt bis zu 5 % der Formulierung zugesetzt werden, können auch direkt dem statischen Mischer über eine Impfstelle zugeführt werden. Zur Einstellung einer ausreichenden Mischgüte wird eine relative Mischerlänge L/D von 2 bis 50, insbesondere 3 bis 10, speziell 5 bis 10 bevorzugt, wobei L die Länge und D der Durchmesser der Mischstrecke ist.

Bevorzugt ist der statische Mischer so dimensioniert, dass der Druckabfall über die Mischstrecke weniger als 10 bar, insbesondere 0,001 bis 5 bar und speziell 0,05 bis 1 bar beträgt.

Zur Durchmischung wird im einfachsten Fall der zum Fördern der Komponenten verwendete Druck ausgenutzt. Es können aber bei höher viskosen Formulierungen auch Druckerhöhungspumpen eingesetzt werden.

Die Mischtemperatur kann sowohl vor als auch während des Mischvorgangs eingestellt werden. Bevorzugt werden der oder die Wirkstoffe und Lösungsmittel so vortemperiert in die Mischstrecke dosiert, so dass die resultierende Mischung die gewünschte Temperatur hat. In einer bevorzugten Ausführungsform wird die Mischstrecke z.B. mittels eines Doppelmantels oder eines Rohrbündels zur Temperatureinstellung eingesetzt, was zu einer besonders schonenden Temperatureinstellung führt

Zum Einstellen einer homogenen Mischung wird im erfindungsgemäßen Verfahren eine Zeit von weniger als 60 Sekunden, bevorzugt weniger als 30 Sekunden, insbesondere weniger als 15 Sekunden und speziell von weniger als 5 Sekunden benötigt. Dies entspricht im wesentlichen der Zeit, die die Komponenten zur Durchströmung des statischen Mischers benötigen und ist um einen Faktor von 100 bis 10.000 schneller als bei chargenweisem Mischen.

Die Kaltfließverbesserer für Mitteldestillate enthalten in einer bevorzugten Ausführungsform ein oder mehrere Copolymere aus Ethylen und olefinisch ungesättigten Verbindungen. Als Ethylen-Copolymere eignen sind insbesondere solche, die neben Ethylen 6 bis 21 mol-%, insbesondere 10 bis 18 mol-% Comonomere enthalten. Vorzugsweise haben diese Copolymere Schmelzviskositäten bei 140°C von 20 bis 10.000 mPas, insbesondere von 30 bis 5.000 mPas, speziell von 50 bis 2.000 mPas.

Bei den olefinisch ungesättigten Verbindungen handelt es sich vorzugsweise um Acrylester, Methacrylester, Alkylvinylether und/oder Alkene, wobei die genannten Verbindungen mit Hydroxylgruppen substituiert sein können. Es können ein oder mehrere Comonomere im Polymer enthalten sein.

Bei den Vinylestern handelt es sich vorzugsweise um solche der Formel 1

CH₂=CH-OCOR¹ (1)

worin R¹ C₁ bis C₃₀-Alkyl, vorzugsweise C₄ bis C₁₆-Alkyl, speziell C₆- bis C₁₂-Alkyl bedeutet. In einer weiteren Ausführungsform können die genannten Alkylgruppen mit einer oder mehreren Hydroxylgruppen substituiert sein.

In einer weiteren bevorzugten Ausführungsform steht R¹ für einen verzweigten Alkylrest oder einen Neoalkylrest mit 7 bis 11 Kohlenstoffatomen, insbesondere mit 8, 9 oder 10 Kohlenstoffatomen. Geeignete Vinylester umfassen Vinylacetat, Vinylpropionat, Vinylbutyrat, Vinylhexanoat, Vinylheptanoat, Vinyloctanoat, Pivalinsäurevinylester, 2-Ethylhexansäurevinylester, sowie Neononansäurevinylester, Neodecansäurevinylester, Neoundecansäurevinylester, Vinyllaurat und Vinylstearat.

Bei den Acrylestern handelt es sich vorzugsweise um solche der Formel 2

CH₂=CR²-COOR³ (2)

worin R² Wasserstoff oder Methyl und R³ C₁- bis C₃₀-Alkyl, vorzugsweise C₄- bis C₁₆-Alkyl, speziell C₆- bis C₁₂-Alkyl bedeutet. Geeignete Acrylester umfassen z.B. Methyl(meth)acrylat, Ethyl(meth)acrylat, Propyl(meth)acrylat, n- und isoButyl(meth)acrylat, Hexyl-, Octyl-, 2-Ethylhexyl-, Decyl-, Dodecyl-, Tetradecyl-, Hexadecyl-, Octadecyl(meth)acrylat sowie Mischungen dieser Comonomere. In einer weiteren Ausführungsform können die genannten Alkylgruppen mit einer oder mehreren Hydroxylgruppen substituiert sein. Ein Beispiel für einen solchen Acrylester ist Hydroxyethylmethacrylat.

Bei den Alkylvinylethern handelt es sich vorzugsweise um Verbindungen der Formel 3

CH₂=CH-OR⁴ (3)

worin R⁴C₁- bis C₃₀-Alkyl, vorzugsweise C₄- bis C₁₆-Alkyl, speziell C₆- bis C₁₂-Alkyl bedeutet. Beispielsweise seien genannt Methylvinylether, Ethylvinylether, isoButylvinylether. In einer weiteren Ausführungsform können die genannten Alkylgruppen mit einer oder mehreren Hydroxylgruppen substituiert sein.

Bei den Alkenen handelt es sich vorzugsweise um einfache ungesättigte Kohlenwasserstoffe mit 3 bis 30 Kohlenstoffatomen, insbesondere 4 bis 16 Kohlenstoffatomen und speziell 5 bis 12 Kohlenstoffatomen. Geeignete Alkene umfassen Propen, Buten, Isobutylen, Penten, Hexen, 4-Methylpenten, Octen, Diisobutylen sowie Norbornen und seine Derivate wie Methylnorbornen und Vinylnorbornen. In einer weiteren Ausführungsform können die genannten Alkylgruppen mit einer oder mehreren Hydroxylgruppen substituiert sein.

Besonders bevorzugte Terpolymerisate enthalten außer Ethylen 0,1 bis 12 mol-%, insbesondere 0,2 bis 5 mol-% des Neononansäurevinylesters bzw. des Neodecansäurevinylesters und 3,5 bis 20 mol-%, insbesondere 8 bis 15 mol-% Vinylacetat, wobei der gesamte Comonomergehalt zwischen 8 und 21 mol-%, bevorzugt zwischen 12 und 18 mol-% liegt. Weitere besonders bevorzugte Copolymere enthalten neben Ethylen und 8 bis 18 mol-% Vinylestern noch 0,5 bis 10 mol-% Olefine wie Propen, Buten, Isobutylen, Hexen, 4-Methylpenten, Octen, Diisobutylen und/oder Norbornen.

Das erfindungsgemäße Verfahren ist auch zur Herstellung von Additivmischungen anwendbar, die weitere als Kaltfließverbesserer und/oder Mineralöladditive eingesetzte Bestandteile enthalten, wie etwa Paraffindispergatoren, Alkylphenolharze, Kammpolymere, und Polyolester.

Paraffindispergatoren reduzieren die Größe der Paraffinkristalle und bewirken, dass die Paraffinkristalle sich nicht absetzen, sondern kolloidal mit deutlich reduziertem Sedimentationsbestreben, dispergiert bleiben. Als Paraffindispergatoren haben sich öllösliche polare Verbindungen, vorzugsweise Stickstoffverbindungen, mit ionischen oder polaren Gruppen, z.B. Aminsalze und/oder Amide bewährt, die durch Reaktion aliphatischer oder aromatischer Amine, vorzugsweise langkettiger aliphatischer Amine, mit aliphatischen oder aromatischen Mono-, Di-, Tri- oder Tetracarbonsäuren oder deren Anhydriden erhalten werden (US-4 211 534). Des gleichen sind Amide und Ammoniumsalze von Aminoalkylenpolycarbonsäuren wie Nitrilotriessigsäure oder Ethylendiamintetraessigsäure mit sekundären Aminen als Paraffindispergatoren geeignet. Andere Paraffindispergatoren sind Copolymere des Maleinsäureanhydrids und α,ß-ungesättigten Verbindungen, die gegebenenfalls mit primären Monoalkylaminen und/oder aliphatischen Alkoholen umgesetzt werden können (EP-A-0 154 177), die Umsetzungsprodukte von Alkenylspirobislactonen mit Aminen (EP-A-0 413 279) und nach EP-A-0 606 055 Umsetzungsprodukte von Terpolymerisaten auf Basis α,ß-ungesättigter Dicarbonsäureanhydride, α,ß-ungesättigter Verbindungen und Polyoxyalkenylether niederer ungesättigter Alkohole. Besonders bevorzugte Paraffindispergatoren enthalten Umsetzungsprodukte sekundärer Fettamine mit 8 bis 36 C-Atomen, insbesondere Dicocosfettamin, Ditalgfettamin und Distearylamin mit Carbonsäuren oder deren Anhydriden.

Auch Alkylphenol-Formaldehydharze sind als Paraffindispergatoren geeignet. Alkylphenol-Aldehyd-Harze sind beispielsweise im Römpp Chemie Lexikon, 9. Auflage, Thieme Verlag 1988-92, Band 4, S. 3351 ff. beschrieben. Die Alkylreste des o- oder p-Alkylphenols können bei den im erfindungsgemäßen Verfahren einsetzbaren Alkylphenol-Aldehyd-Harzen gleich oder verschieden sein und besitzen 1 - 50, vorzugsweise 1 - 20, insbesondere 4 - 12 Kohlenstoffatome; bevorzugt handelt es sich um n-, iso- und tert.-Butyl, n- und iso-Pentyl, n- und iso-Hexyl, n- und iso-Octyl, n- und iso-Nonyl, n- und iso-Decyl, n- und iso-Dodecyl und Octadecyl. Der aliphatische Aldehyd im Alkylphenol-Aldehydharz besitzt vorzugsweise 1 - 4 Kohlenstoffatome. Besonders bevorzugte Aldehyde sind Formaldehyd, Acetaldehyd und Butyraldehyd, insbesondere Formaldehyd. Das Molekulargewicht der Alkylphenol-Aldehyd-Harze beträgt 400 - 10.000, bevorzugt 400 - 5000 g/mol. Voraussetzung ist hierbei, dass die Harze öllöslich sind.

In einer bevorzugten Ausführungsform der Erfindung handelt es sich bei diesen Alkylphenol-Formaldehydharzen um solche, die Oligo- oder Polymere mit einer repetitiven Struktureinheit der Formel 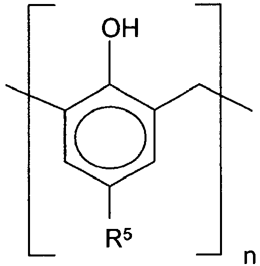 worin R⁵ für C₁-C₅₀-Alkyl oder -Alkenyl und n für eine Zahl von 2 bis 100 steht. Unter Kammpolymeren versteht man Polymere, bei denen Kohlenwasserstoffreste mit mindestens 8, insbesondere mindestens 10 Kohlenstoffatomen an einem Polymerrückgrat gebunden sind. Vorzugsweise handelt es sich um Homopolymere, deren Alkylseitenketten mindestens 8 und insbesondere mindestens 10 Kohlenstoffatome enthalten. Bei Copolymeren weisen mindestens 20 %, bevorzugt mindestens 30 % der Monomeren Seitenketten auf (vgl. Comb-like Polymers - Structure and Properties; N.A. Plate and V.P. Shibaev, J. Polym. Sci. Macromolecular Revs. 1974, 8, 117 ff). Beispiele für geeignete Kammpolymere sind z.B. Fumarat/Vinylacetat-Copolymere (vgl. EP-A-0 153 176), Copolymere aus einem C₆-C₂₄-Olefin und einem N-C₆- bis C₂₂-Alkylmaleinsäureimid (vgl. EP-A-0 320 766), ferner veresterte Olefin/Maleinsäureanhydrid-Copolymere, Polymere und Copolymere von α-Olefinen und veresterte Copolymere von Styrol und Maleinsäureanhydrid.

Beispielsweise können Kammpolymere durch die Formel 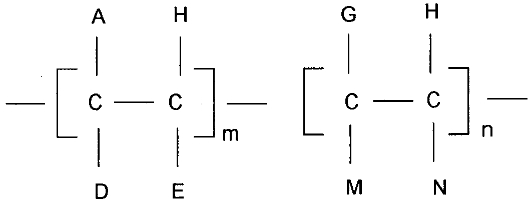 beschrieben werden. Darin bedeuten
- A R',: COOR', OCOR', R"-COOR', OR';
- D: H, CH₃, A oder R";
- E: H, A;
- G: H, R", R"-COOR', einen Arylrest oder einen heterocyclischen Rest;
- M: H, COOR", OCOR", OR", COOH;
- N: H, R", COOR", OCOR, einen Arylrest;
- R': eine Kohlenwasserstoffkette mit 8 bis 50 Kohlenstoffatomen;
- R": eine Kohlenwasserstoffkette mit 1 bis 10 Kohlenstoffatomen;
- m: eine Zahl zwischen 0,4 und 1,0; und
- n: eine Zahl zwischen 0 und 0,6.

Das Mischungsverhältnis (in Gewichtsteilen) der Ethylencopolymere mit Paraffindispergatoren, Alkylphenolharzen bzw. Kammpolymeren beträgt jeweils 1:10 bis 20:1, vorzugsweise 1:1 bis 10:1.

Für die Verwendung als Kaltfließverbesserer im erfindungsgemäßen Verfahren geeignete Olefinpolymere können sich direkt von monoethylenisch ungesättigten Monomeren ableiten oder indirekt durch Hydrierung von Polymeren, die sich von mehrfach ungesättigten Monomeren wie Isopren oder Butadien ableiten, hergestellt werden. Bevorzugte Copolymere enthalten neben Ethylen Struktureinheiten, die sich von α-Olefinen mit 3 bis 24 C-Atomen ableiten und Molekulargewichte von bis zu 120.000 aufweisen. Bevorzugte α-Olefine sind Propylen, Buten, Isobuten, n-Hexen, Isohexen, n-Octen, Isoocten, n-Decen, Isodecen. Der Comonomergehalt an Olefinen liegt bevorzugt zwischen 15 und 50 mol-%, besonders bevorzugt zwischen 20 und 35 mol-% und speziell zwischen 30 und 45 mol-%. Diese Copolymeren können auch geringe Mengen, z. B. bis zu 10 mol-% weiterer Comonomere wie z.B. nicht endständige Olefine oder nicht konjugierte Olefine enthalten. Bevorzugt sind Ethylen-Propylen-Copolymere.

Die Olefincopolymere können nach bekannten Methoden hergestellt werden, z.B. mittels Ziegler- oder Metallocen-Katalysatoren

Weitere geeignete Fließverbesserer sind Polyoxyalkylenverbindungen wie beispielsweise Ester, Ether und Ether/Ester, die mindestens einen Alkylrest mit 12 bis 30 C-Atomen tragen. Wenn die Alkylgruppen von einer Säure stammen, stammt der Rest von einem mehrwertigen Alkohol; kommen die Alkylreste von einem Fettalkohol, so stammt der Rest der Verbindung von einer Polysäure.

Geeignete Polyole sind Polyethylenglykole, Polypropylenglykole, Polybutylenglykole und deren Mischpolymerisate mit einem Molekulargewicht von ca. 100 bis ca. 5000, vorzugsweise 200 bis 2000. Weiterhin geeignet sind Alkoxylate von Pölyolen, wie beispielsweise von Glycerin, Trimethylolpropan, Pentaerythrit, Neopentylglykol, sowie die daraus durch Kondensation zugänglichen Oligomere mit 2 bis 10 Monomereinheiten, wie z.B. Polyglycerin. Bevorzugte Alkoxylate sind solche mit 1 bis 100, insbesondere 5 bis 50 mol Ethylenoxid, Propylenoxid und/oder Butylenoxid pro mol Polyol. Ester sind besonders bevorzugt.

Fettsäuren mit 12 bis 26 C-Atomen sind bevorzugt zur Umsetzung mit den Glykolen zur Bildung der Esteradditive, wobei bevorzugt C₁₈- bis C₂₄-Fettsäuren verwendet werden, speziell Stearin- und Behensäure. Die Ester können auch durch Veresterung von polyoxyalkylierten Alkoholen hergestellt werden. Bevorzugt sind vollständig veresterte polyoxyalkylierte Poylole mit Molekulargewichten von 150 bis 2000, bevorzugt 200 bis 600. Besonders geeignet sind PEG-600-Dibehenat und Glycerin-20-Ethylenglykol-Tribehenat.

Die Additivkonzentrate können mit Lösungsmittel vorverdünnt oder bevorzugt lösungsmittelfrei in den Mischprozess eingesetzt werden, wobei höher viskose, wachsartige Substanzen bevorzugt in erwärmter Form eingesetzt werden. Voraussetzung ist alleinig, dass die Rohstoffe fließfähig und pumpbar sind.

Das erfindungsgemäße Verfahren betrifft beispielsweise die Mischung eines Kaltfließverbesserers mit einem Lösungsmittel, oder zweier Kaltfließverbesserer mit einem Lösungsmittel. Das erfindungsgemäße Verfahren betrifft ebenfalls beispielsweise die Mischung eines, zweier oder mehrerer Kaltfließverbesserer mit zwei oder mehreren Lösungsmitteln. Es können ein oder mehrere, z.B. zwei drei, vier, oder auch mehr Kaltfließverbesserer und ein oder mehrere Lösungsmittel zusammengemischt werden. Der Anteil der einzelnen Kaltfließverbesserer an der Mischung (in Gewichtsteilen; ohne Lösungsmittel) liegt zwischen 2,5 und 80 Gew.-% und speziell zwischen 5 und 70 Gew.-%. Der Lösungsmittelanteil liegt zwischen 10 und 95, bevorzugt zwischen 20 und 80, speziell zwischen 25 und 75 Gew.-%. Im Falle von Verdünnungen z.B. von Ethylencopolymeren kann auch ein Wirkstoff alleine anwesend sein.

Lösungs- oder Dispersionsmittel sind aliphatische und/oder aromatische Kohlenwasserstoffe oder Kohlenwasserstoffgemische, z.B. Benzinfraktionen, Kerosin, Decan, Pentadecan, Toluol, Xylol, Ethylbenzol oder kommerzielle Lösungsmittelgemische wie Solvent Naphtha, ^{®}Shellsoll AB, ^{®}Solvesso 150, ^{®}Solvesso 200, ^{®}Exxsol, ^{®}ISOPAR- und ^{®}Shellsol D-Typen. Die angegebenen Lösungsmittelgemische enthalten unterschiedliche Mengen an aliphatischen und/oder aromatischen Kohlenwasserstoffen. Die Aliphaten können geradkettig (n-Paraffine) oder verzweigt sein (iso-Paraffine). Aromatische Kohlenwasserstoffe können mono-, di- oder polyzyklisch sein und gegebenenfalls einen oder mehrere Substituenten tragen. Gegebenenfalls können auch polare Lösungsvermittler wie z. B. Butanol, 2-Ethylhexanol, Decanol, iso-Decanol oder iso-Tridecanol oder höhere Ether und/oder Ester zugesetzt werden.

Die nach dem erfindungsgemäßen Verfahren hergestellten Additivmischungen sind geeignet, die Kaltfließeigenschaften von tierischen, pflanzlichen oder mineralischen Ölen zu verbessern. Sie sind für die Verwendung in Mitteldestillaten besonders gut geeignet. Als Mitteldestillat bezeichnet man insbesondere solche Mineralöle, die durch Destillation von Rohöl gewonnen werden und im Bereich von 120 bis 450°C sieden, beispielsweise Kerosin, Jet-Fuel, Diesel und Heizöl. Vorzugsweise werden solche Mitteldestillate verwendet, die weniger als 350 ppm Schwefel, besonders bevorzugt weniger als 200 ppm Schwefel insbesondere weniger als 50 ppm Schwefel und in speziellen Fällen weniger als 10 ppm Schwefel enthalten. Es handelt sich dabei im allgemeinen um solche Mitteldestillate, die einer hydrierenden Raffination unterworfen wurden, und die daher nur geringe Anteile an polyaromatischen und polaren Verbindungen enthalten. Vorzugsweise handelt es sich um solche Mitteldestillate, die 95 %-Destillationspunkte unter 370°C, insbesondere 350°C und in Spezialfällen unter 330°C aufweisen.

Die erfindungsgemäßen Additivmischungen können auch in Biodiesel eingesetzt werden. Bei "Biodiesel" oder "Biokraftstoff" handelt es sich um Fettsäurealkylester aus Fettsäuren mit 14 bis 24 C-Atomen und Alkoholen mit 1 bis 4 C-Atomen. Gewöhnlich enthält ein größerer Teil der Fettsäuren ein, zwei oder drei Doppelbindungen. Besonders bevorzugt handelt es sich z. B. um Rapsölsäuremethylester und dessen Mischungen mit weiteren Pflanzenölsäureestern. Die erfindungsgemäßen Additive können mit gleichem Erfolg in Mischungen aus Fettsäuremethylestern und Mineralöldiesel eingesetzt werden. Derartige Mischungen enthalten bevorzugt bis zu 25 Gew.-%, insbesondere bis zu 10 Gew.-%, speziell bis zu 5 Gew.-% an Brennstofföl tierischen oder pflanzlichen Ursprungs.

Durch die Additivmischungen in ihren Kälteeigenschaften verbesserten Mineralöle oder Mineralöldestillate enthalten 0,001 bis 2 Vol.-%, vorzugsweise 0,005 bis 0,5 Vol.-% der Mischungen, bezogen auf das Destillat.

Das erfindungsgemäße Verfahren erhöht die Flexibilität bei der Produktion einer Vielzahl verschiedenster Additivmischungen aus der zu Grunde liegenden geringen Anzahl von Ausgangsstoffen. Die Additivmischungen können mit geringem Investitionsaufwand bei zugleich niedrigen Betriebs- und Unterhaltskosten hergestellt werden. Durch Einstellung einer definierten und reproduzierbaren Mischtemperatur wird zudem eine deutlich verbesserte Lagerstabilität auch bei niedrigen Temperaturen erzielt. Durch den extrem schnellen Mischvorgang ist eine reproduzierbare Einstellung der kolloidalen und rheologischen Eigenschaften wie beispielsweise des Pour Points möglich.

Die Additivmischungen können allein oder auch zusammen mit anderen Zusatzstoffen verwendet werden, beispielsweise mit Stockpunkterniedrigern, Dehazern, Antistatika, Antioxidantien, Leitfähigkeitsverbesserern, Lubricity-Additiven Cetanzahlverbesserern und Zusätzen zur Erniedrigung des Cloud-Points. Des weiteren werden sie erfolgreich zusammen mit Additivpaketen eingesetzt, die u.a. bekannte aschefreie Dispergieradditive, Detergenzien, Entschäumer, Demulgatoren, und Korrosionsinhibitoren enthalten. Diese weiteren Additive können den erfindungsgemäßen Additivmischungen natürlich auch im Rahmen des erfindungsgemäßen Verfahrens beigemischt werden.

### Beispiele

**Tabelle 1: Eingesetzte Rohstoffe**

| | |
|---|---|
| E1 | Copolymer aus Ethylen und 28 Gew.-% Vinylacetat mit einer Schmelzviskosität bei 140°C von 250 mPa·s |
| E2 | Terpolymer aus Ethylen, 30 Gew.-% Vinylacetat und 8 Gew.-% Neodecansäurevinylester mit einer Schmelzviskosität bei 140°C von 95 mPa·s |
| E3 | Terpolymer aus Ethylen, 26 Gew.-% Vinylacetat und 7 Gew.-% 4-Methylpenten mit einer Schmelzviskosität bei 140°C von 200 mPas |
| E4 | Mit Tetradecanol verestertes Copolymer aus Maleinsäureanhydrid und Tetradecen, 65 %ig in Solvent Naphtha |
| E5 | Umsetzungsprodukt eines Terpolymers aus C₁₄/C₁₆-α-Olefin, Maleinsäureanhydrid und Allylpolyglykol mit 2 Equivalenten Ditalgfettamin, 62 %ig in Solvent Naphtha |
| E6 | Mit Behensäure verestertes Glycerin-20-ethoxilat, 70 %ig in Solvent Naphtha |
| E7 | Copolymer aus Ethylen und 34,5 Gew.-% Vinylacetat mit einer Schmelzviskosität bei 140°C von 105 mPa·s |
| E8 | Copolymer aus Ethylen und 21 Gew.-% Vinylacetat mit einer Schmelzviskosität bei 140 °C von 530 mPa·s |

### Versuch 1

10.000 kg des Polymers E1 (erwärmt auf 65°C) und 10.500 kg Kerosin (T = 55°C) werden parallel im Laufe von zwei Stunden in ein Förderrohr dosiert und über einen mit Wendelelementen bestückten statischen Mischer mit einem Durchmesser von 100 mm und einer Länge von 2.000 mm gefördert. Der Druckverlust über den statischen Mischer beträgt 0,2 bar, die Mischdauer 2,5 Sekunden. Die resultierende Mischtemperatur beträgt 60°C. Es entsteht eine homogene 49 %ige Polymersuspension, die auch nach 7 Tagen Lagerung bei 40°C völlig homogen ist.

### Versuch 2

Die Durchführung erfolgte wie bei Versuch 1, jedoch wurde das Polymer E1 mit 75°C und das Lösungsmittel mit 85°C der Mischstrecke zugeführt, woraus eine Mischtemperatur von 81 °C resultiert. Die anfänglich fast klare Lösung trübt bei Abkühlung ein und ist nach 7 Tagen Lagerung bei 40°C noch immer völlig homogen.

### Versuch 3 (Vergleich)

Die Durchführung erfolgt wie bei Versuch 1, jedoch wird das Polymer E1 mit 90°C und das Lösungsmittel mit 115°C der Mischstrecke zugeführt, woraus eine Mischtemperatur von 98°C resultiert. Die anfänglich fast klare Lösung trübt bei Abkühlung ein und zeigt 2 Tagen Lagerung bei 40°C einen klaren Überstand von ca. 6 Vol.-%; nach 7 Tagen Lagerung zeigt das die Formulierung 39 Vol.-% Polymersediment und einen klaren Überstand.

### Versuch 4 (Vergleich)

10.000 kg des Polymers E1 und 10.500 kg Kerosin werden in einen Behälter chargiert und mittels Mantelheizung (Dampftemperatur 120°C) auf 60°C erwärmt. Nach 3 Stunden Umwälzen zeigt die Mischung noch deutliche Inhomogenitäten; erst nach 8 Stunden ist sie homogen. Nach 2 Tagen Lagerung bei 40°C besteht diese Suspension aus 60 Vol.-% einer milchig weißen Bodenphase und einem opaken Überstand. Nach 7 Tagen Lagerung bei dieser Temperatur sind 25 Vol.-% Polymer sedimentiert, der Überstand ist klar.

### Versuch 5

5.000 kg der 49 %igen Polymersuspension aus Versuch 1 mit einer Temperatur von 60°C und 7250 kg Kerosin mit einer Temperatur von 25°C werden binnen einer Stunde gleichzeitig über den statischen Mischer aus Versuch 1 gefördert. Die Mischtemperatur der Formulierung beträgt 38°C. Die resultierende 20 %ige Polymersuspension, ist homogen und lässt auch nach zweiwöchiger Lagerung bei 25°C keine Sedimentation erkennen.

### Versuch 6 (Vergleich)

5.000 kg der 49 %igen Polymersuspension aus Versuch 1 werden in einen Behälter chargiert, mittels Mantelheizung (Dampftemperatur 120°C) unter Umwälzen im Laufe von 6 Stunden auf 60°C erwärmt und anschließend mit 7250 kg Kerosin verdünnt. Nach 4 Stunden Umwälzen wird eine homogene Suspension erhalten. Nach 2 Tagen Lagerung bei 25°C zeigt diese Suspension ca. 8 Vol.-% einer mit Polymer angereicherten Bodenphase, nach einer Woche beginnt sie im oberen Bereich klar zu werden und nach zwei Wochen besteht sie aus 12 Vol.-% Polymersediment und einem klaren Überstand.

### Versuch 7

7.680 kg Polymer E2 und 1.920 kg Polymer E3 mit Temperaturen von 70°C und 72°C werden zusammen mit 6.400 kg Kerosin (T = 55°C) im Laufe von 80 Minuten kontinuierlich über den in Versuch 1 beschriebenen statischen Mischer gefördert. Die Mischtemperatur beträgt 64°C. Die resultierende 60 %ige Suspension ist auch nach zweiwöchiger Lagerung bei 35°C völlig homogen.

### Versuch 8 (Vergleich)

Die Komponenten des Versuchs 7 werden nach dem Verfahren des Vergleichsversuchs 4 bei 60°C gemischt. Nach zweiwöchiger Lagerung bei 35°C zeigt diese Suspension 20 % Polymersediment, darüber jeweils ca. 40 Vol.-% einer opaken und einer klaren Phase.

### Versuch 9

5.000 kg Polymer E3 und 1.540 kg Polymer E4 mit Temperaturen von 75°C und 55°C werden zusammen mit 5.460 kg Kerosin (T = 65°C) im Laufe von 90 Minuten kontinuierlich über den in Versuch 1 beschriebenen statischen Mischer gefördert. Die Mischtemperatur beträgt 67°C. Die resultierende 50 %ige Suspension ist auch nach zweiwöchiger Lagerung bei 40°C homogen.

### Versuch 10

5.500 kg Polymer E2 (T = 94°C), 3.550 kg Polymer E5 (T =45°C) und 1.570 kg Polymer E6 (T = 72°C) werden zusammen mit 5.380 kg Kerosin (T = 53°C) im Laufe von 90 Minuten kontinuierlich über den in Versuch 1 beschriebenen statischen Mischer gefördert. Die Mischtemperatur beträgt 66°C. Die resultierende 55 %ige Suspension ist auch nach dreiwöchiger Lagerung bei 40°C homogen.

### Versuche 11 bis 15: Einstellung des Pour Points

In der Mischapparatur des Versuchs 1 wurden 9.000 kg einer Mischung aus 7.200 kg Polymer E7 und 1.800 kg Polymer E8 bei unterschiedlichen Temperaturen mit 9.000 kg Kerosin gemischt. In Tabelle 2 sind die Temperaturen von Polymer, Lösungsmittel und resultierender Formulierung, die optische Erscheinung des Polymers sowie die an den Formulierungen gemessenen Pour Points wiedergegeben. Der Pour Point wird gemäß ISO 3015 gemessen.

**Tabelle 2: Versuche zur Beeinflussung des Pour Points**

| Versuch | T_{Polymer} | T_{Lösungsmittel} | T_{Mischung} | Pour Point |
|---|---|---|---|---|
| 11 | 95°C (klar) | 75°C | 84°C | -3°C |
| 12 | 92°C (klar) | 32°C | 61°C | -3°C |
| 13 | 81°C (opaleszent) | 77°C | 81°C | 0°C |
| 14 | 69°C (opaleszent) | 94°C | 82°C | 3°C |
| 15 | 53°C (trüb) | 92°C | 72°C | 18°C |

## Patentansprüche

1. Kontinuierliches Verfahren zur Herstellung von Additivmischungen für Mineralöle und Mineralöldestillate, enthaltend
A) einen Kaltfließverbesserer für Mitteldestillate, welcher ein oder mehrere Copolymere aus Ethylen und Vinylester umfasst, und
C) mindestens ein organisches Lösungsmittel, ausgewählt aus aliphatischen und/oder aromatischen Kohlenwasserstoffen oder Kohlenwasserstoffgemischen,
worin der Anteil der einzelnen Kaltfließverbesserer an der Mischung in Gewichtsteilen ohne Lösungsmittel zwischen 2,5 und 80 Gew.-% und der Lösungsmittelanteil zwischen 10 und 95 Gew.-% liegt,
**gekennzeichnet durch** die Mischung von Kaltfließverbesserer und Lösungsmittel mittels eines statischen Mischers, wobei die Temperatur der Additivmischung am Auslaß des statischen Mischers von 30°C bis 90°C beträgt.

2. Verfahren nach Anspruch 1, **gekennzeichnet durch** eine Temperatur der Additivmischung am Auslaß des statischen Mischers von 50 bis 85°C.

3. Verfahren nach Anspruch 1 und/oder 2, **dadurch gekennzeichnet, dass** Additivmischungen hergestellt werden, die weitere als Kaltfließverbesserer und/oder Mineralöladditive eingesetzte Bestandteile enthalten.

4. Verfahren nach Anspruch 3, **dadurch gekennzeichnet, dass** der weitere Kaltfließverbesserer mindestens einen Paraffindispergator enthält.

5. Verfahren nach Anspruch 3, **dadurch gekennzeichnet, dass** der weitere Kaltfließverbesserer mindestens ein Kammpolymer enthält.

6. Verfahren nach Anspruch 3, **dadurch gekennzeichnet, dass** der weitere Kaltfließverbesserer mindestens ein Alkylphenolharz enthält.

7. Verfahren nach Anspruch 3, **dadurch gekennzeichnet, dass** der weitere Kaltfließverbesserer mindestens einen Polyolester enthält.

8. Verfahren nach einem oder mehreren der Ansprüche 1 bis 7, **dadurch gekennzeichnet, dass** ein Wendelmischer mit Wendelelementgruppen aus 2 bis 200 Mischelementen verwendet wird.

9. Verfahren nach einem oder mehreren der Ansprüche 1 bis 8, **dadurch gekennzeichnet, dass** der Mischer eine relative Mischerlänge L/D von 2 bis 50 aufweist, wobei L die Länge und D der Durchmesser der Mischstrecke ist.

10. Verfahren nach einem oder mehreren der Ansprüche 1 bis 9, **dadurch gekennzeichnet, dass** der Druckabfall über die Mischstrecke weniger als 10 bar beträgt.

11. Verfahren nach einem oder mehreren der Ansprüche 1 bis 10, **dadurch gekennzeichnet, dass** die Mischzeit weniger als 60 s beträgt.

12. Verfahren nach einem oder mehreren der Ansprüche 1 bis 11, **dadurch gekennzeichnet, dass** der Kaltfließverbesserer ein Terpolymerisat enthält, welches außer Ethylen 0,1 bis 12 mol-%, insbesondere 0,2 bis 5 mol-% Neononansäurevinylester bzw. des Neodecansäurevinylester und 3,5 bis 20 mol-%, insbesondere 8 bis 15 mol-% Vinylacetat enthält, wobei der gesamte Comonomergehalt zwischen 8 und 21 mol-%, bevorzugt zwischen 12 und 18 mol-% liegt.

13. Verfahren nach einem oder mehreren der Ansprüche 1 bis 12, **dadurch gekennzeichnet, dass** der Kaltfließverbesserer ein Terpolymerisat enthält, welches neben Ethylen und 8 bis 18 mol-% Vinylestern noch 0,5 bis 10 mol-% Olefine, ausgewählt aus Propen, Buten, Isobutylen, Hexen, 4-Methylpenten, Octen, Diisobutylen und/oder Norbornen, enthält.

14. Additivmischung hergestellt nach dem Verfahren gemäß einem oder mehreren der Ansprüche 1 bis 13.

## Claims

1. A continuous process for preparing additive mixtures for mineral oils and mineral oil distillates, comprising
A) a cold flow improver for middle distillates comprising one or more copolymers of ethylene and vinyl esters, and
C) at least one organic solvent selected from aliphatic and/or aromatic hydrocarbons or hydrocarbon mixtures,
in which the proportion of the individual cold flow improvers in the mixture in parts by weight without solvent is between 2.5 and 80% by weight and the solvent content is between 10 and 95% by weight,
which comprises mixing cold flow improver and solvent by means of a static mixer, the temperature of the additive mixture at the outlet of the static mixer being from 30°C to 90°C.

2. The process as claimed in claim 1, wherein the temperature of the additive mixture at the outlet of the static mixer is from 50 to 85°C.

3. The process as claimed in claim 1 and/or 2, wherein the additive mixtures comprising further constituents used as cold flow improvers and/or mineral oil additives are produced.

4. The process as claimed in claim 3, wherein the further cold flow improver comprises at least one paraffin dispersant compound.

5. The process as claimed in claim 3, wherein the further cold flow improver comprises at least one comb polymer.

6. The process as claimed in claim 3, wherein the further cold flow improver comprises at least one alkylphenol resin.

7. The process as claimed in claim 3, wherein the further cold flow improver comprises at least one polyol ester.

8. The process as claimed in one or more of claims 1 to 7, wherein a helical mixer having helical element groups consisting of from 2 to 200 mixing elements is used.

9. The process as claimed in one or more of claims 1 to 8, wherein the mixer has a relative mixer length L/D of from 2 to 50, where L is the length and D is the diameter of the mixing zone.

10. The process as claimed in one or more of claims 1 to 9, wherein the pressure drop over the mixing zone is less than 10 bar.

11. The process as claimed in one or more of claims 1 to 10, wherein the mixing time is less than 60 s.

12. The process as claimed in one or more of claims 1 to 11, wherein the cold flow improver comprises a terpolymer which, apart from ethylene, contains from 0.1 to 12 mol%, in particular from 0.2 to 5 mol%, of vinyl neononanoate or of vinyl neodecanoate, and from 3.5 to 20 mol%, in particular from 8 to 15 mol%, of vinyl acetate, and the total comonomer content is between 8 and 21 mol%, preferably between 12 and 18 mol%.

13. The process as claimed in one or more of claims 1 to 12, wherein the cold flow improver comprises a terpolymer which, apart from ethylene and from 8 to 18 mol% of vinyl esters, also contains from 0.5 to 10 mol% of olefins selected from the group consisting of propene, butene, isobutylene, hexene, 4-methylpentene, octene, diisobutylene and/or norbornene.

14. An additive mixture prepared according to the process as claimed in one or more of claims 1 to 13.

## Revendications

1. Procédé continu de fabrication de mélanges d'additifs pour huiles minérales et distillats d'huiles minérales, contenant
A) un agent d'amélioration de l'écoulement à froid pour distillats moyens, qui comprend un ou plusieurs copolymères d'éthylène et d'ester vinylique, et
C) au moins un solvant organique, choisi parmi les hydrocarbures ou mélanges d'hydrocarbures aliphatiques et/ou aromatiques,
la proportion des agents d'amélioration de l'écoulement à froid individuels dans le mélange en parties en poids sans solvant étant comprise entre 2,5 et 80 % en poids, et la proportion de solvant étant comprise entre 10 et 95 % en poids,
**caractérisé par** le mélange des agents d'amélioration de l'écoulement à froid et des solvants au moyen d'un mélangeur statique, la température du mélange d'additifs à la sortie du mélangeur statique étant de 30 °C à 90 °C.

2. Procédé selon la revendication 1, **caractérisé par** une température du mélange d'additifs à la sortie du mélangeur statique de 50 à 85 °C.

3. Procédé selon la revendication 1 et/ou 2, **caractérisé en ce que** des mélanges d'additifs qui contiennent d'autres constituants utilisés en tant qu'agents d'amélioration de l'écoulement à froid et/ou additifs pour huiles minérales sont fabriqués.

4. Procédé selon la revendication 3, **caractérisé en ce que** l'autre agent d'amélioration de l'écoulement à froid contient au moins un dispersant de paraffines.

5. Procédé selon la revendication 3, **caractérisé en ce que** l'autre agent d'amélioration de l'écoulement à froid contient au moins un polymère en peigne.

6. Procédé selon la revendication 3, **caractérisé en ce que** l'autre agent d'amélioration de l'écoulement à froid contient au moins une résine d'alkylphénol.

7. Procédé selon la revendication 3, **caractérisé en ce que** l'autre agent d'amélioration de l'écoulement à froid contient au moins un ester de polyol.

8. Procédé selon une ou plusieurs des revendications 1 à 7, **caractérisé en ce qu'**un mélangeur à hélice contenant des groupes d'éléments à hélice constitués par 2 à 200 éléments de mélange est utilisé.

9. Procédé selon une ou plusieurs des revendications 1 à 8, **caractérisé en ce que** le mélangeur présente une longueur de mélangeur relative L/D de 2 à 50, L étant la longueur et D le diamètre du segment de mélange.

10. Procédé selon une ou plusieurs des revendications 1 à 9, **caractérisé en ce que** la perte de charge dans le segment de mélange est de moins de 10 bar.

11. Procédé selon une ou plusieurs des revendications 1 à 10, **caractérisé en ce que** la durée de mélange est de moins de 60 s.

12. Procédé selon une ou plusieurs des revendications 1 à 11, **caractérisé en ce que** l'agent d'amélioration de l'écoulement à froid contient un terpolymère, qui contient en plus de l'éthylène 0,1 à 12 % en moles, notamment 0,2 à 5 % en moles, d'ester vinylique de l'acide néononanoïque ou d'ester vinylique de l'acide néodécanoïque, et 3,5 à 20 % en moles, notamment 8 à 15 % en moles, d'acétate de vinyle, la teneur totale en comonomères étant comprise entre 8 et 21 % en moles, de préférence entre 12 et 18 % en moles.

13. Procédé selon une ou plusieurs des revendications 1 à 12, **caractérisé en ce que** l'agent d'amélioration de l'écoulement à froid contient un terpolymère qui contient en plus de l'éthylène et 8 à 18 % en moles d'esters de vinyle également 0,5 à 10 % en moles d'oléfines choisies parmi le propène, le butène, l'isobutylène, l'hexène, le 4-méthylpentène, l'octène, le düsobutylène et/ou le norbornène.

14. Mélange d'additifs fabriqué par le procédé selon une ou plusieurs des revendications 1 à 13.
